Europäisches Patentamt

European Patent Office

Office européen des brevets

(19)

(11) Veröffentlichungsnummer: **0 171 680**

**B1**

(12) **EUROPÄISCHE PATENTSCHRIFT**

(45) Veröffentlichungstag der Patentschrift:
**17.01.90**

(21) Anmeldenummer: **85109374.0**

(22) Anmeldetag: **25.07.85**

(51) Int. Cl. [4]: **G 01 N 27/26**

(54) Thermoplatte für Elektrophoreseeinrichtungen.

(30) Priorität: **16.08.84 DE 3430064**

(43) Veröffentlichungstag der Anmeldung:
**19.02.86 Patentblatt 86/08**

(45) Bekanntmachung des Hinweises auf die Patenterteilung:
**17.01.90 Patentblatt 90/03**

(84) Bennante Vertragsstaaten:
**CH FR GB LI SE**

(56) Entgegenhaltungen:
**GB-A-2 089 372**
**US-A-3 371 027**
**US-A-4 190 517**

(73) Patentinhaber: **Flösser, Hans**
**Ortenauer Strasse 13**
**D-6900 Heidelberg-Rohrbach (DE)**

(72) Erfinder: **Flösser, Hans**
**Ortenauer Strasse 13**
**D-6900 Heidelberg-Rohrbach (DE)**

(74) Vertreter: **Schulze, Ilse, Dipl.-Chem.**
**Patenanwälte Dipl.-Chem. I. Schulze Dipl.-Ing. E.**
**Gutscher Gaisbergstrasse 3**
**D-6900 Heidelberg (DE)**

## Beschreibung

Die Erfindung betrifft eine Thermoplatte für Elektrophoreseeinrichtungen, bei denen zu untersuchende Materialproben eine ebene Gelschicht in einer in der Gelschicht liegenden Wanderungsrichtung durchlaufen, bestehend aus zwei ebenen, in verhältnismässig geringem Abstand voneinander parallel angeordneten und miteinander an ihren Rändern verbundenen, zweckmässig rechteckigen Glasplatten, zwischen denen ein Innenraum luftdicht eingeschlossen ist, und die Einlaufleitungen und einen Auslauf für ein Kühlmedium aufweist, das in der Thermoplatte entgegen der Wanderungsrichtung der Materialproben fliesst.

Die Elektrophorese findet als analytisches Trennverfahren sowie für mikropräparative Zwecke, insbesondere bei kolloidalen und makromolekularen Stoffen, verbreitet Anwendung. Die Joule'sche Wärme, die aufgrund des fliessenden Stromes bei einem Gel erforderlich ist, kann ungleiche Temperaturverteilungen entstehen lassen. Dabei besteht die Gefahr einer nicht erwünschten Verzerrung der Makromolekülbänder und dadurch verursachter unbefriedigender Auflösung. Zur besseren Auflösung wird daher seit geraumer Zeit eine sogenannte Thermoplatte verwendet, um mit einer solchen eine gleichmässige Temperaturverteilung auf der Oberfläche der Gelträgerplatte, also der Thermoplatte, zu erreichen. Von besonderer Bedeutung ist dabei die gleichmässige Temperaturverteilung quer zur Wanderungsrichtung des Gels.

Es sind bereits verschiedene Träger- oder Thermoplatten bekannt und im Einsatz. Sie bestehen im wesentlichen aus einer Kombination von Kunststoff und Glas oder Glas und Metall. Diese ungleichen Materialien mit ihren ungleichen Wärmeausdehnungskoeffizienten ergeben Probleme nicht nur hinsichtlich der Festigkeit und Standzeit, sondern auch durch die aufgrund der unterschiedlichen Wärmeleitfähigkeit entstehenden Wärmegradienten.

Aus der DE-A-3 046 729 ist eine thermostatische Platte bekannt geworden, bei der die den Innenraum einschliessenden Platten aus Glas bestehen. Im Innenraum sind zur Bewegungsrichtung des Kühlmediums quer und versetzt angeordnete Leitstreifen aus wärmeleitendem Material, wie Kupfer, Aluminium oder Edelstahl, vorgesehen. Durch solche Leitstreifen wird aber das Kühlmedium immer wieder zur Umlenkung gezwungen, so dass durch die ständige Richtungsumkehr die Strömungsgeschwindigkeit gehemmt und dadurch ungleichmässig wird und dabei die gleichmässige Temperaturverteilung nicht gewährleistet ist. Hinzu kommt, dass die Leitstreifen im Strömungsraum des Kühlmediums Hindernisse darstellen, die die Druck- und Reibungsverhältnisse im Innenraum der Thermoplatte beeinträchtigen.

Aufgabe der Erfindung ist es, eine Thermoplatte der eingangs genannten Art zu schaffen, bei der das Kühlmedium ein System durchläuft, in dem keine Wärmegradienten entstehen und in dem über den gesamten Arbeitsbereich gleichmässig verteilte Reibungs- und Druckverhältnisse und eine optimale Temperaturverteilung quer zur Gelwanderungsrichtung sichergestellt ist.

Diese Aufgabe wird durch eine Thermoplatte der eingangs genannten Art dadurch gelöst, dass die Einlaufleitungen durch Durchlässe an den Eckbereichen einer der Schmalseiten der Thermoplatte und entlang gegenüberliegender Längsseiten im Innenraum zwischen den Glasplatten bis zu der zweiten Schmalseite der Thermoplatte geführt sind und in eine die Breite dieser zweiten Schmalseite einnehmenden Zulaufleitung münden, aus der mehrere Einlassbohrungen in den Innenraum der Thermoplatte führen, gegenüber der Zulaufleitung eine Ablaufleitung an der Innenseite über die Breite der ersten Schmalseite der Thermoplatte angeordnet aber von den an deren Längsseiten verlaufenden Einlaufleitungen getrennt und mit dem Innenraum der Thermoplatte durch mehrere Auslassbohrungen verbunden ist und aus der ein Auslauf für das Kühlmedium führt.

Zweckmässige Weiterbildungen der erfindungsgemässen Thermoplatte sind in den abhängigen Ansprüchen aufgeführt.

Im Innenraum einer solchen Thermoplatte trifft das Kühlmedium auf keinerlei Hindernisse und es fliesst ohne Umlenkung durch den Innenraum der Platte. Die gegebenenfalls vorgesehenen Abstandhalter bestehen vorzugsweise aus Glas, also aus dem gleichen Material wie die Floatingglasplatten, und nehmen nur einen geringen Bereich des Innenraumes der Thermoplatte ein. Solche Abstandhalter werden insbesondere bei grösseren Thermoplatten angeordnet, um über den gesamten Arbeitsbereich einen gleichmässigen Abstand der Glasplatten sicherzustellen und einen bei solchen Platten möglicherweise auftretenden Verzug zu verhindern. Durch den freien Innenraum der Thermoplatte sind gleiche Druck- und Reibungsverhältnisse gewährleistet und das Auftreten von Wärmegradienten ist nicht zu befürchten. Der gleichmässige Durchfluss des Kühlmediums und die gleichmässige Temperaturverteilung werden durch die Anordnung der Einlaufleitungen, der Zulaufleitung, mit den Einlassbohrungen sowie der Ablaufleitung mit den Auslaufbohrungen erreicht.

Die im wesentlichen gleichmässig verteilten, auf das Durchlassvolumen der Zu- und Ablaufleitungen abgestimmten Einlass- und Auslassbohrungen bewirken eine gleichmässige innige Vermengung des durchfliessenden Kühlmediums und insbesondere eine gleichmässige Temperaturverteilung quer zur Gelwanderungsrichtung. Der Einlass des Kühlmediums an beiden Seiten der Gelwanderungsrichtung ergibt den Vorteil, dass schon bei Arbeitsbeginn eine gleichmässige Temperaturverteilung entlang der Gelwanderungsrichtung stattfindet. Durch die auf ein Minimum reduzierten Bauteile der Thermoplatte ist deren Gewicht entsprechend gering, und sie kann mit einer minimalen Gesamtdicke hergestellt werden.

Die erfindungsgemässe Thermoplatte wird anhand eines in den Zeichnungen dargestellten Ausführungsbeispiels näher erläutert. Es zeigen:

Fig. 1 eine Draufsicht auf eine Thermoplatte, teilweise im Schnitt;

Fig. 2 eine Schnittansicht A – A aus Fig. 1;

Fig. 3 eine Schnittansicht B – B aus Fig. 1;

Fig. 4 einen Detailschnitt gemäss der Linie C – C in Fig. 1; und

Fig. 5 Kurven betreffend Durchströmung von Elektrophoreseplatten.

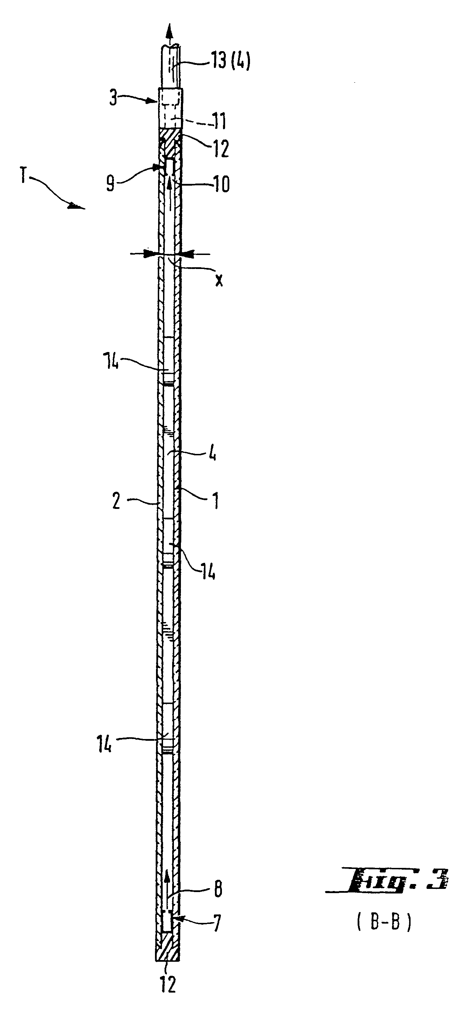

Die Thermoplatte T besteht aus zwei Glasplatten 1 und 2, die in einem geringen Abstand x voneinander, vorzugsweise 3 mm (Fig. 3), angeordnet und miteinander luftdicht verbunden sind.

Besonders geeignet ist hierfür Floatingglas, das gute elektrische Isoliereigenschaften besitzt und sich als GEL-Träger bestens bewährt hat. Die Glasplatten 1 und 2 sind an ihren Umfangsrändern durch eine Vergussmasse 12 miteinander verbunden, derart, dass die Klebermasse die Platten im gewünschten Abstand hält und diese wie ein Rahmen einfasst. Die Höhe des durch den Abstand x der parallel angeordneten Glasplatten 1, 2 eingeschlossenen Innenraumes ist über den gesamten Bereich der Thermoplatte T gleich. Der gleichmässige Querschnitt des Innenraumes ohne Hindernisse sichert eine gleichmässige Fliessgeschwindigkeit des Kühlmediums, das durch zwei Einlaufleitungen 4 und 6 zugeführt wird. Die Einlaufleitungen 4 und 6 sind durch Durchlässe 3 bzw. 5 an den Ecken einer der Schmalseiten der Thermoplatte T geführt und verlaufen an den gegenüberliegenden Längsseiten in dem durch die Glasplatten 1, 2 eingeschlossenen Innenraum bis zu dessen gegenüberliegender Schmalseite. Hier münden sie in eine Zulaufleitung 7, die die gesamte Breite dieser Schmalseite einnimmt und aus der mehrere Einlassbohrungen 8 in den Innenraum der Thermoplatte T münden.

Gegenüber dieser Zulaufleitung 7 ist an der Innenseite der gegenüberliegenden Schmalseite des Innenraumes der Thermoplatte T eine Auslaufleitung 9 angeordnet, deren gegen den Innenraum der Thermoplatte T gerichtete Wand mit mehreren Auslassbohrungen 10 versehen ist. Aus der Auslaufleitung 9, die die gesamte Breite dieser Schmalseite des Innenraumes der Thermoplatte 7 einnimmt, die aber von den Einlaufleitungen 4, 6 getrennt ist, führt ein Auslauf 11 durch die den Rahmen der Thermoplatte T bildende Vergussmasse 12.

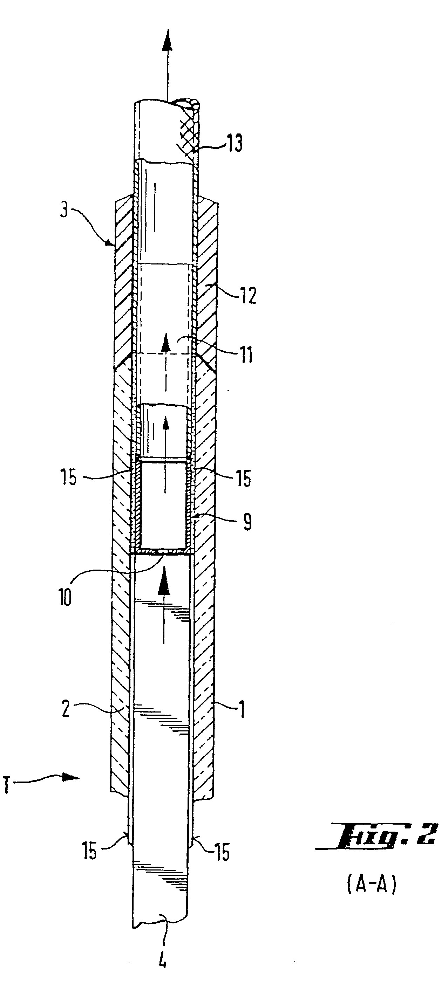

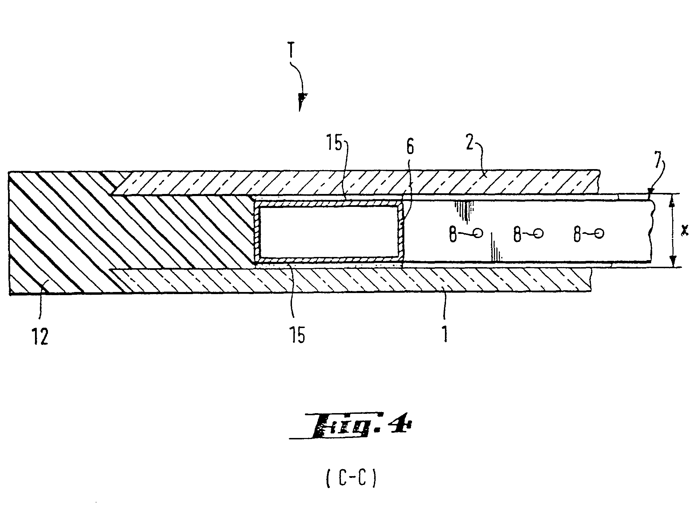

Die Einlaufleitungen 4, 6 die Zulaufleitung 7 und die Auslaufleitung 9 bestehen vorzugsweise aus einem Rechteckrohr aus Metall, beispielsweise Aluminium. Ein solches Rechteckrohr kann passgerecht zwischen die Glasplatten 1, 2 eingefügt und mit einer Klebermasse 15 eingekittet werden (Fig. 2 und 4). An den Auslauf 11 ist ein Schlauch 13 angeschlossen.

Um einer möglichen Verzerrung der Glasplatten 1, 2 entgegenzuwirken und den gleichmässigen Abstand x zwischen diesen Platten in jedem Fall sicherzustellen, ist es insbesondere bei grösseren Platten zweckmässig in der Längsmittellinie B – B Abstandhalter 14 zur Abstützung der Glasplatten 1, 2 anzuordnen. Es sind dies kleine runde Glasplättchen, die dem Fluss des Kühlmediums keinen nennenswerten Widerstand entgegensetzen, so dass gleichmässige Druck- und Reibungsverhältnisse in der Thermoplatte T gewährleistet sind und nicht beeinträchtigt werden.

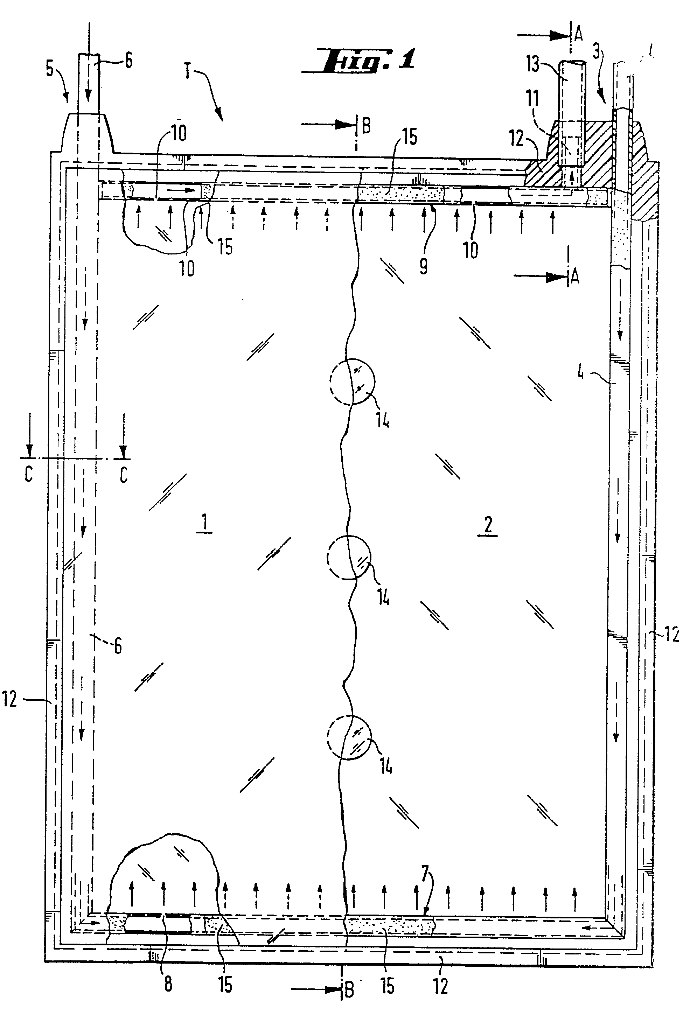

Im Betrieb wird das Kühlmedium durch die Einlaufleitungen 4 und 5 eingeleitet und fliesst gleichmässig in Richtung der Pfeile (Fig. 1) entlang der beiden Längsseiten der Thermoplatte T und gelangt in einem gleichmässigen Fluss von beiden Seiten in die Zulaufleitung 7 an der Schmalseite der Thermoplatte. Von hier wird das Kühlmedium durch die Einlassbohrungen 8 in den Innenraum der Thermoplatte T gedrückt und fliesst, ebenfalls gleichmässig, durch die Auslassbohrungen 10 in die Ablaufleitung 9 und von hier durch den Auslauf 11 in den Schlauch 13.

Das Durchlassvolumen der Zulaufleitung 7 und der Ablaufleitung 9 ist auf die Querschnittssummen der Einlass- und Auslassbohrungen 8 bzw. 10 abgestimmt. Es ist mindestens so gross wie oder grösser als die Summe der Querschnitte. Die Einlassbohrungen 8 und die Auslassbohrungen 10 sind identisch ausgebildet und die Abstände zwischen den Einlassbohrungen 8 und die Abstände zwischen den Auslassbohrungen 10 sind gleich. Zweckmässig sind die Einlassbohrungen 8 in der Einlaufleitung 7 und die Auslassbohrungen 10 in der Ablaufleitung 9 jeweils in Fluchtlinie angeordnet.

Bei einer so aufgebauten Thermoplatte T herrschen im oberen und unteren Bereich ihres Innenraumes gleiche Verhältnisse. Das Kühlmedium strömt beidseitig gleichmässig erwärmt ein, unterliegt beim Aufsteigen in der Platte gleichmässigem Druck ohne Umlenkungen und fliesst gleichmässig aus. Diese Gleichmässigkeit aller bei der Elektrophorese erforderlichen Parameter ergeben einen optimalen Effekt und damit ausserordentlich gute Ergebnisse.

Vergleichsversuche durchgeführt an einer Platte nach der DE-A-3 046 729 und an einer erfindungsgemässen Platte zeigen die Überlegenheit der neuen Ausführungsform.

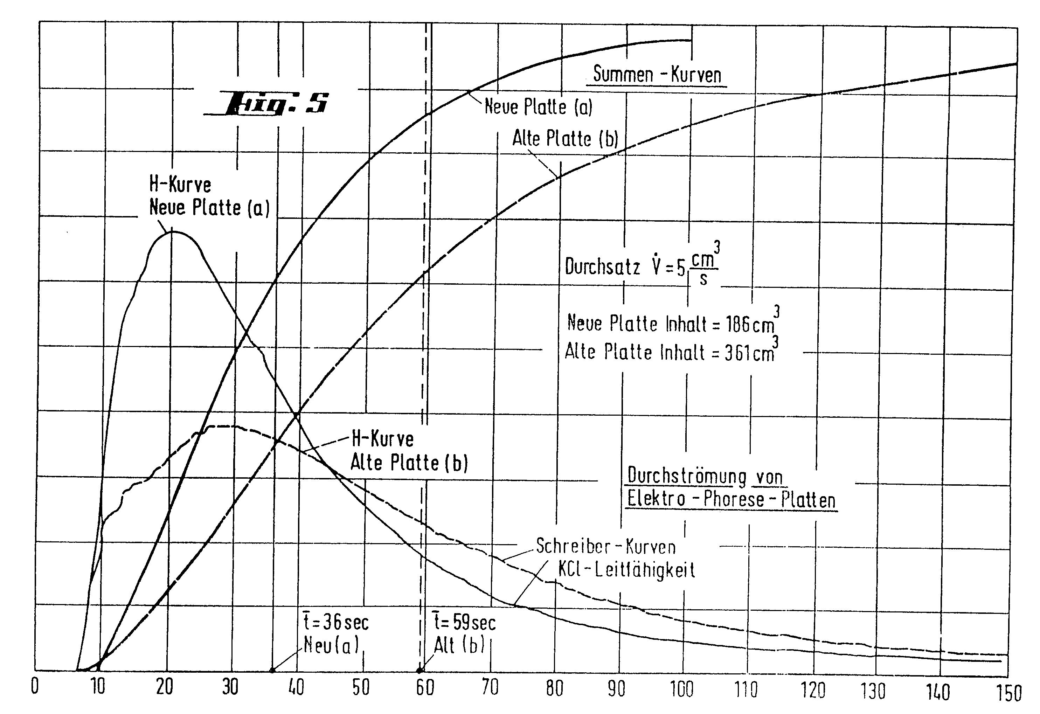

**Untersuchung der Durchströmung und Temperatur von zwei Elektrophoreseplatten (Fig. 5).**

a) Die erfindungsgemässe Platte = "Neue Platte"

b) Die Platte gemäss DE-A-3 046 729 Beide Platten hatten etwa die gleichen Abmessungen, nämlich 170 mm x 370 mm Oberfläche, die neue Platte mit einem 3 mm weiten Kühlspalt, die alte Platte mit 6 mm weitem Kühlspalt, der ausserdem durch 6 Querstege von je 12 cm Länge in quer durchströmte Kanäle aufgeteilt ist.

An diesen beiden Platten wurden unter genau gleichen Bedingungen, die etwa den Betriebsbedingungen der Elektrophorese-Trennung entsprechen folgende Untersuchung gemacht:

1. Bei Beheizung einer Plattenseite mit einem Warmluft-Fön wurden auf der anderen Plattenseite mit Thermoelementen (aufgeklebt) an 4 Punkten Oberflächen-Temperaturen gemessen. Die Anordnung der Messpunkte war derart, dass der Abstand zum oberen bzw. unteren Rand etwa 5 cm und zum seitlichen Rand etwa 3 cm betrug. Damit verblieb ein Abstand zwischen den Messpunkten von 10 bis 11 cm. Auf dieser Abstandslinie sollte für eine gute Elektrophorese-Trennung die Temperatur möglichst kontant sein. Unsere Messung ergab bei Temperaturen von 55 bis 57°C folgende Differenzen:

"Neue Platte": $\Delta T_{unten} = 0,3°C \; \Delta T_{oben} = 0,2°C$
"Alte Platte": $\Delta T_{unten} = 1,3°C \; \Delta T_{oben} = 1,5°C$

Die "Neue Platte" wies also eine viel geringere Temperatur-Differenz quer zur Trennungsrichtung auf als die "Alte Platte". Die 5 bis 7-fach grössere Temperatur-Differenz der "Alten Platte" entsteht dadurch, dass darin im Gegensatz zu der geordneten parallelen Längs-Strömung der "Neuen Platte" das Kühlwasser durch die Querstege quer gelenkt wird, indem es sich gleichzeitig durch das Gel erwärmt.

2. Die Durchströmung wurde mittels "Stossmarkierung" mit KCl-Lösung im Kühlwasser und Messung der Leitfähigkeitszeitkurve am Austritt untersucht. Schon die Form der beiliegenden Messkurve (H-Kurve) zeigt, dass die Verweilzeitverteilung der "Neuen Platte" viel enger, d.h. gleichmässiger ist als die der "Alten Platte". Die langgezogene H-Kurve bzw. die fläche Summenkurve derselben entstehen durch Wirbel in allen Ecken der Querstege und Totwasser in diesen Ecken. Der Totwasser-Anteil der "Alten Platte" beträgt 17 %, bei der "Neuen Platte" praktisch 0 %.

Diese Daten zeigen, dass die "Neue Platte" deutlich besser als die "Alte Platte" ist und dies offensichtlich aufgrund der "geordneten" Parallel-Strömung.

Patentansprüche

1. Thermoplatte für Elektrophoreseeinrichtungen, bei denen zu untersuchende Materialproben eine ebene Gelschicht in einer in der Gelschicht liegenden Wanderungsrichtung durchlaufen, bestehend aus zwei ebenen in verhältnismässig geringem Abstand voneinander parallel angeordneten und miteinander an ihren Rändern verbundenen, zweckmässig rechteckigen Glasplatten, zwischen denen ein Innenraum luftdicht eingeschlossen ist und die Einlaufleitungen und einen Auslauf für ein Kühlmedium aufweist, das in der Thermoplatte entgegen der Wanderungsrichtung der Materialproben fliesst, *dadurch gekennzeichnet*, dass die Einlaufleitungen (4, 6) durch Durchlässe (3, 5) an den Eckbereichen einer der Schmalseiten der Thermoplatte (T) und entlang gegenüberliegender Längsseiten im Innenraum zwischen den Glasplatten (1, 2) bis zu der zweiten Schmalseite der Thermoplatte (T) geführt sind und in eine die Breite dieser zweiten Schmalseite einnehmenden Zulaufleitung (7) münden, aus der mehrere Einlassbohrungen (8) in den Innenraum der Thermoplatte (T) führen, gegenüber der Zulaufleitung (7) eine Ablaufleitung (9) an der Innenseite über die Breite der ersten Schmalseite der Thermoplatte (T) angeordnet, aber von den an deren Längsseiten verlaufenden Einlaufleitungen (4, 6) getrennt und mit dem Innenraum der Thermoplatte (T) durch mehrere Auslassbohrungen (10) verbunden ist und aus der ein Auslauf (11) für das Kühlmedium führt.

2. Thermoplatte nach Anspruch 1, *dadurch gekennzeichnet*, dass das Durchlassvolumen der Zulaufleitung (7) und der Ablaufleitung (9) mindestens gleich gross ist wie oder grösser ist als die Summe der Querschnitte der jeweiligen Einlass- und Auslassbohrungen (8 bzw. 10).

3. Thermoplatte nach Anspruch 1 und 2, *dadurch gekennzeichnet*, dass die Einlass- und Auslassbohrungen (8 bzw. 10) gleichmässig über die Länge der Zulauf- und Ablaufleitung (7 bzw. 9) verteilt sind.

4. Thermoplatte nach Anspruch 3, *dadurch gekennzeichnet*, dass die Einlassbohrungen (8) in der Zulaufleitung (7) und die Auslassbohrungen (10) in der Ablaufleitung (9) im wesentlichen fluchtend angeordnet sind.

5. Thermoplatte nach Anspruch 1, *dadurch gekennzeichnet*, dass die Glasplatten (1, 2) an ihren umlaufenden Randbereichen durch eine Vergussmasse (12) miteinander verbunden sind, die die Glasplatten (1, 2) in einem entsprechenden Abstand (x) hält.

6. Thermoplatte nach Anspruch 1, *dadurch gekennzeichnet*, dass je nach Grösse der Thermoplatte (T) ein oder mehrere Abstandhalter (14) zwischen den Glasplatten (1, 2) angeordnet sind.

7. Thermoplatte nach Anspruch 6, *dadurch gekennzeichnet*, dass die Abstandhalter (14) aus dem gleichen Material bestehen wie die Glasplatten (1, 2).

## Revendications

1. Thermoplaque pour des dispositifs d'électrophorèse, dans lesquels des échantillons de matières à analyser traversent une couche plane de gel dans un sens de migration se trouvant dans la couche de gel, constituée de deux plaques de verre planes, avantageusement rectangulaires, disposées parallèlement l'une à l'autre à une distance relativement faible, reliées entre elles par leurs bords, entre lesquelles est définie de manière étanche à l'air une chambre intérieure et qui comporte les conduits d'entrée et un conduit de sortie pour un milieu de refroidissement s'écoulant dans la thermoplaque en sens inverse de celui de migration des échantillons de matière, *caractérisée* en ce que les conduits d'entrée (4, 6) passent, par des passages (3, 5) aux extrémités de l'un des petits côtés de la thermoplaque (T) et le long des grands côtés opposés, dans la chambre intérieure entre les plaques de verre (1, 2), jusqu'au second petit côté de la thermoplaque (T) et débouchent dans un conduit d'amenée (7) qui prend la largeur de ce second petit côté et duquel partent plusieurs orifices d'admission (8) dans la chambre intérieure de la thermoplaque (T), un conduit d'évacuation (9) étant disposé, en face du conduit d'admission (8), du côté intérieur sur la largeur du premier petit côté de la thermoplaque (T) mais en étant distinct des conduits d'entrée (4, 6) s'étendant sur les grands côtés, et communiquant avec la chambre intérieure de la thermoplaque (T) par plusieurs orifices de sortie (10), une évacuation (11) pour le milieu de refroidissement partant du conduit d'évacuation.

2. Thermoplaque suivant la revendication 1, *caractérisée* en ce que le volume réservé au passage du conduit d'amenée (7) et du conduit d'évacuation (9) est au moins aussi grand, ou est plus grand, que la somme des sections transversales des orifices d'admission et de sortie (8) et (10).

3. Thermoplaque suivant la revendication 1 ou 2, *caractérisée* en ce que les orifices d'admission et de sortie (8 et 10) sont répartis d'une manière uniforme sur la longueur du conduit d'amenée (7) et du conduit d'évacuation (9).

4. Thermoplaque suivant la revendication 3, *caractérisée* en ce que les orifices d'admission (8) du conduit d'amenée (7) et les orifices de sortie (10) du conduit d'évacuation (9) sont sensiblement alignés.

5. Thermoplaque suivant la revendication 1, *caractérisée* en ce que les plaques de verre (1, 2) sont reliées entre elles sur leur région d'extrémité faisant tout le tour par une masse de scellement (12), qui maintient les plaques de verre (1, 2) à une distance (x) adéquate.

6. Thermoplaque suivant la revendication 1, *caractérisée* en ce que, suivant la dimension de la thermoplaque (T), une ou plusieurs entretoises (14) sont montées entre les plaques de verre (1, 2).

7. Thermoplaque suivant la revendication 6, *caractérisée* en ce que les entretoises (14) sont en le même matériau que les plaques de verre (1, 2).

## Claims

1. Thermoplate in an eletrophoresis device wherein material samples to be examined pass through a planar gel layer in a flow direction in the gel layer, the thermoplate being comprised of two planar, suitably rectangular glass panes spaced parallely at a relatively small distance from each other and having edges connected to each other to define an air-tight chamber between the glass panes, and inlet conduits and an outlet for a cooling medium which flows in the thermoplate chamber in opposite direction to the movement of the material samples, *characterized* in that the inlet conduits (4, 6) being guided through bores (3, 5) at the corners of one of the short sides of the thermoplate (T) and along the opposite long sides in the chamber between the glass panes (1, 2) to the second short sides, said inlet conduits leading into a delivery conduit (7) extending along the width of the second short sides, said delivery conduit comprising a plurality of inlet bores (8) leading into the chamber of the thermoplate (T), a discharge conduit (9) extending opposite the delivery conduit (7) and along the width of the first short sides of the thermoplate (T), said discharge conduit being separated from the inlet conduits (4, 6) at the long sides but communicating with the chamber of the thermoplate (T) through several outlet bores (10) and an outlet (11) for the cooling medium leading out of the discharge conduit.

2. Thermoplate according to claim 1, *characterized* in that the throughput capacity of the delivery conduit (7) and discharge conduit (9) is at least equal to or larger than the sum of the throughput capacities of the respective cooling medium inlet and outlet bores (8 and 9 resp.).

3. Thermoplate according to claims 1 and 2, *characterized* in that the inlet and outlet bores (8 and 10 resp.) are arranged uniformly along the length of the delivery and discharge conduits (7 and 9 resp.).

4. Thermoplate according to claim 3, *characterized* in that the inlet bores (8) in the delivery conduit (7) and the outlet bores (10) in the discharge conduit (9) are arranged in substantial alignment.

5. Thermoplate according to claim 1, *characterized* in that the glass panes (1, 2) are hermetically sealed to each other along the surrounding edges with a sealing compound (12) to hold the glass panes at a small distance from each other.

6. Thermoplate according to claim 1, *characterized* in that, depending on the size of the thermoplate (T), one or more spacers (14) are disposed between the glass panes (1, 2) to hold them at a small distance from each other.

7. Thermoplate according to claim 6, *characterized* in that the spacers (14) are comprised of the same material as the glass panes (1, 2).

**Fig. 1**

*Fig. 2*

(A-A)

3

13 (4)
3
11
12
T
9
10
X
14
4
2
1
14
14
8
7
12

*Fig. 3*

( B-B )

_Fig. 4_

( C-C )

Fig: 5

Summen - Kurven

Neue Platte (a)

Alte Platte (b)

H-Kurve
Neue Platte (a)

Durchsatz $\dot{V} = 5 \frac{cm^3}{s}$

Neue Platte Inhalt = 186 $cm^3$
Alte Platte Inhalt = 361 $cm^3$

H-Kurve
Alte Platte (b)

Durchströmung von
Elektro - Phorese - Platten

Schreiber - Kurven
KCl - Leitfähigkeit

$\bar{t} = 36$ sec
Neu (a)

$\bar{t} = 59$ sec
Alt (b)

0   10   20   30   40   50   60   70   80   90   100   110   120   130   140   150

EP 0 171 680 B1